**Europäisches Patentamt**

**European Patent Office**

**Office européen des brevets**

(19)

(11) **EP 1 420 398 A2**

(12) **EUROPEAN PATENT APPLICATION**

(43) Date of publication:
**19.05.2004 Bulletin 2004/21**

(51) Int Cl.⁷: **G11B 7/135**

(21) Application number: **03256785.1**

(22) Date of filing: **28.10.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **31.10.2002 JP 2002317987**<br><br>(71) Applicant: **Pioneer Corporation**<br>**Tokyo-to (JP)** | (72) Inventors:<br>• **Kikuchi, Ikuya**<br>**Tsurugashima-shi, Saitama-ken (JP)**<br>• **Ohtaki, Sakashi**<br>**Tsurugashima-shi, Saitama-ken (JP)**<br><br>(74) Representative: **Haley, Stephen**<br>**Gill Jennings & Every,**<br>**Broadgate House,**<br>**7 Eldon Street**<br>**London EC2M 7LH (GB)** |

(54) **Optical pickup, and method and apparatus for correcting aberration of optical beam**

(57) A spherical aberration correcting unit (9, 11 to 13) corrects an aberration caused in an optical beam (B) radiated toward an information recording medium (DK) and focused on the medium. The correcting unit comprises an aberration corrector (9), driver (12), light receiver (11), and controller (13). The aberration corrector, which is composed of a plurality of optical members (9a, 9b), forms the optical beam into a parallel pencil and corrects the aberration caused in the optical beam. The driver drives any one of the optical members in an optical axis direction of the optical beam. The light receiver receives light reflected from the medium to produce a light-reception signal from the received light, and the controller controls the driver based on the produced light-reception signal.

FIG. 3

EP 1 420 398 A2

## Description

The present invention relates to a method and apparatus for correcting an aberration caused in an optical beam focused onto an object to be detected and an optical pickup used by the correcting apparatus.

(Description of the Related Art)

In general, an optical pickup is employed by an information recording medium. In this field of the optical pickup, a density of recording or reproducing pieces of information becomes larger with a decrease in the diameter of a spot of an optical beam radiated from an optical pickup and focused on an information recording medium. The diameter of an optical spot becomes smaller as a light wavelength is made shorter and a numerical aperture (NA) of an objective lens is made larger.

Thus, to raise a memory capacity of the optical recording medium requires that a semiconductor laser (LD) which emits an optical beam of a shorter wavelength be installed as a light source in an optical pickup and an objective lens of higher numerical aperture (NA) be employed. In the field of a high-density optical disk system, peoples' attention has been drawn to a standard, in which a blue-violet semiconductor laser of which emission wavelength is 405 nm is used as a light source, an objective lens of which numerical aperture is 0.85 is used to raise a memory capacity up to 25 gigabytes per surface, and the thickness of a cover layer of a recording medium is shortened down to 100 um to prevent the performance from being deteriorated due to an inclination of the recording medium. In addition, a double-layer disk is also standardized, so that the thickness of a cover layer thereof is 75 um. The thickness of a cover layer is defined as a thickness from a light-incidence surface of the recording medium to an information recording layer incorporated in the medium.

On the other hand, a spherical aberration caused in an optical system is proportional to a biquadrate of a numerical aperture of an objective lens and is proportional to an error in the thickness of a recording medium. Hence, if it is desired to employ an objective lens having a high aperture rate of about 0.85, the thickness of a recording medium should be uniform to be limited within a certain constant range of thickness errors. However, such a high-precision production of the recording medium is extremely difficult. Even if the thickness error is limited within the allowable margin of error in the production, a spherical aberration usually results in a larger amount. This requires that the spherical aberration be corrected whenever optical disks are exchanged. Particularly, to remove a spherical aberration caused in reproduction of information from a double-layer disk, special correction means is required which has not been used for the conventional DVD or CD (Compact Disc).

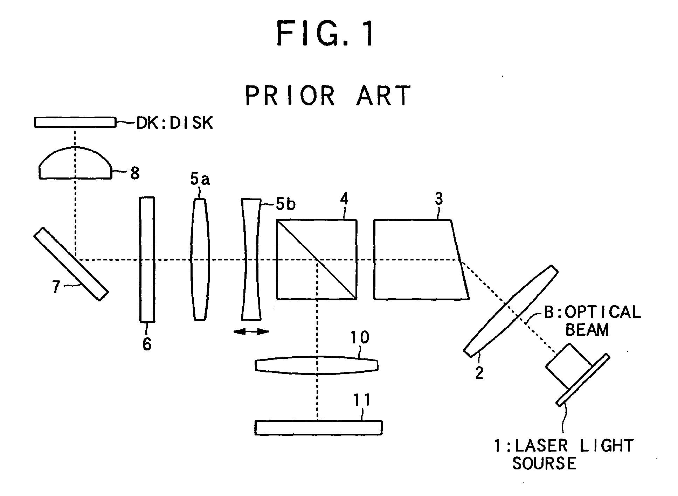

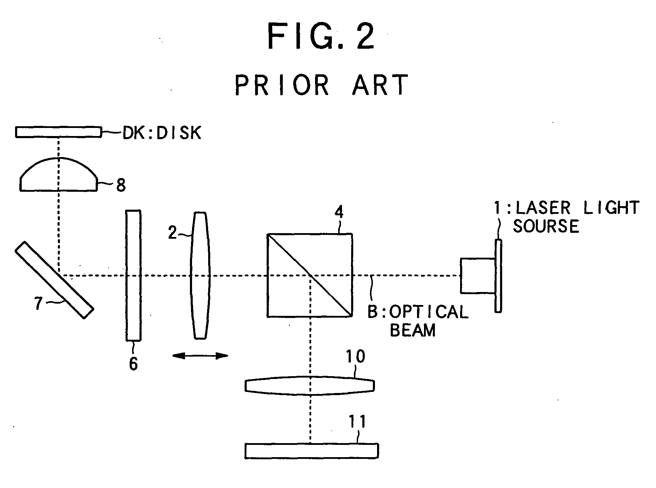

Such a conventional configuration for correcting the spherical aberration will now be explained in connection with Figs. 1 and 2.

Fig. 1 exemplifies an optical pickup in which an expander lens is used as means for correcting the spherical aberration.

As shown in Fig. 1, an optical beam B emitted from a laser light source 1 is converted to a parallel pencil by a collimator 2. The parallel pencil passes expander lenses, and then enters an objective lens 8. The expander lenses are composed of a convex lens 5a and a concave lens 5b, and have the function of expanding the incident parallel light flux and then giving it back to parallel light, before outputting the parallel light. Incidentally, in Fig. 1, also inserted in the optical beam path are a forming prism 3, PBS 4, quarter wavelength plate 6, rising mirror 7, detection lens 10, detector 11, and optical disk DK.

How to correct a spherical aberration will now be explained. For example, a change in the thickness of the disk DK causes a spherical aberration in an optical beam B. In this case, the convex lens 5a or the concave lens 5b is moved back and forth along an optical axis passing the lenses 5a and 5b composing the expander lens, resulting in that the emitted light flux is shifted from the parallel light. This shift enables an incident angle of light to the objective lens 8 to be changed, thus making it possible to cancel out the caused spherical aberration.

Fig. 2 is an example which uses a collimator lens serving as means for correcting a spherical aberration.

In an optical pickup shown in Fig. 2, moving the collimator lens 2 along the optical axis allows an angle of light flux emitted from the collimator lens 2 to be adjusted, whereby a spherical aberration of the optical beam B can be corrected, similarly to the situation obtained when the expander lens is moved in Fig. 1.

Incidentally, the configuration shown in Fig. 2 uses only one collimator lens, but this is a mere example. Alternatively, as shown by Japanese Patent Laid-open (KOKAI) publication No. 2002-150598, a collimator lens made up of a combination of two or more lens can be used to move together, with a spherical aberration corrected.

However, the above conventional pickups have faced various difficulties. In the example shown in Fig. 1, because the expander lens is used, an additional part (i.e., expander lens) should be added to the pickup, thus increasing parts cost and necessitating an additional space for installation. Therefore, to use the expander lens is not suitable for making the entire pickup compact.

Further, in the pickup configuration shown in Fig. 2, the whole collimator lens should be moved, so that a lens driven amount necessary for correcting a spherical aberration becomes larger. Thus, a space acquired for such drive of the collimator lens is obliged to be large. Additionally, it is necessary to move the collimator lens over a long distance, resulting in a longer time for the correction and increased energy consumption.

An object of the present invention is to provide, with due consideration to the difficulties of the above conventional techniques, an optical pickup, an aberration correcting unit, and an aberration correcting method, which are able to complete a correcting operation for a spherical aberration in a shorter time, with lens installation space narrowed and consumed energy saved.

According to one aspect of the present invention, there is provided a spherical aberration correcting unit for correcting an aberration caused in an optical beam radiated toward an object to be detected and focused on the object. The unit comprises an aberration corrector composed of a plurality of optical members and configured to form the optical beam into a parallel pencil and to correct the aberration caused in the optical beam; a driver configured to drive any one of the optical members in an optical axis direction of the optical beam; a light receiver configured to receive light reflected from the object to produce a light-reception signal from the received light; and a controller configured to control the driver based on the produced light-reception signal.

By way of example, the object is an optical information recording medium. Preferably, a relationship of 0.2<|f1/f|<0.82 is fulfilled, wherein a composite focal length of the aberration corrector is f and a focal length of the driven optical member is f1. Still preferably, any one of claims 1 to 3, wherein the aberration corrector is a collimator lens.

According to another aspect of the present invention, there is provided an optical pickup for reading and writing information from and to an optical information medium by radiating an optical beam toward the optical information medium, the optical beam being focused on the optical information medium, the optical pickup comprises an spherical aberration correcting unit for correcting an aberration caused in the optical beam. In this configuration, the unit comprises an aberration corrector composed of a plurality of optical members and configured to form the optical beam into a parallel pencil and to correct the aberration caused in the optical beam; a driver configured to drive any one of the optical members in an optical axis direction of the optical beam; a light receiver configured to receive light reflected from the medium to produce a light-reception signal from the received light; and a controller configured to control the driver based on the produced light-reception signal.

According to another aspect of the present invention, there is provided a spherical aberration correcting method for correcting an aberration caused in an optical beam radiated toward an object to be detected and focused on the object. The method comprises the steps of: forming the optical beam into a parallel pencil using a plurality of optical members, during which time, correcting the aberration caused in the optical beam; driving any one of the optical members in an optical axis direction of the optical beam; receiving light reflected from the object to produce a light-reception signal from the received light; and controlling the driver based on the produced light-reception signal.

Other objects and aspects of the present invention will become apparent from the following description of embodiments with reference to the accompanying drawings in which:

Fig. 1 exemplifies an outlined configuration of a conventional optical pickup;

Fig. 2 exemplifies an outlined configuration of another conventional optical pickup;

Fig. 3 shows an outlined configuration of an optical pickup according to an embodiment of the present invention;

Figs. 4A and 4B explain the correction of a spherical aberration, which is carried out by using a single collimator lens;

Figs. 5A and 5B explain the correction of a spherical aberration, which is carried out by using a single collimator lens device composed of plural lens;

Fig. 6 is a graph exemplifying a relationship between a moved amount required when a whole one collimator is moved and a moved amount required when only one lens combined into a one collimator lens device is moved;

Fig. 7A shows one example of results of an experiment carried out using a conventional optical pickup;

Fig. 7B shows one example of results of an experiment carried out using an optical pickup according to the present embodiment;

Figs. 8A to 8D show modifications of the embodiment in which the one collimator lens device is composed of plural lens; and

Fig. 9 explains a design example of the collimator lens according to the present embodiment.

Preferred embodiments of a spherical aberration correcting method and unit of the present invention will now be described hereinafter with reference to the accompanying drawings.

In the following embodiment, an object to be detected is a high-density optical disk and the present invention is applied to an optical pickup which radiates an optical beam toward the object and includes an aberration correcting unit for correcting an aberration of the optical beam.

An optical disk DK, which serves as the object, is subjected to recording or reproduction of information thereto or therefrom. The disk DK has a substrate, on which formed is a recording layer in which information signals are recorded based on phase changes. On this recording layer, a cover layer is formed to have a thickness of about 0.1 mm, for example. This cover layer functions as a protective layer to protect the recording layer. Light is made to enter the disk DK from the cover layer side, not the substrate side, for the recording and reproduction, because the cover layer is greatly thinner than the substrate.

Because the configuration is made such that the light comes into the disk through the cover layer, a distance to the recording layer becomes shorter, whereby a coma aberration is suppressed. Hence, compared to the conventional CD or DVD, it is possible to realize both of higher density and larger capacity in recording.

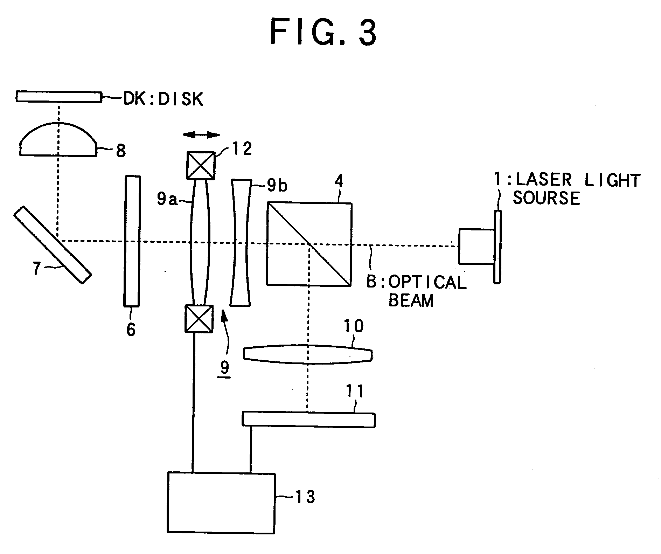

Referring to Fig. 3, the configuration of an optical pickup according to the present embodiment will now be explained. Fig. 3 pictorially shows such configuration.

As shown in Fig. 3, an optical pickup according to the present embodiment is provided with a laser light source 1, polarizing beam splitter (PBS) 4, quarter wavelength plate 6, rising mirror 7, objective lens 8, a collimator lens device 9 consisting of two lenses 9a and 9b serving as an aberration corrector, detection lens 10, detector 11 serving as a light receiver, actuator 12 serving as a driver, and controller 13. Of the collimator lens device 9, the lens 9a is formed into a convex lens, while the lens 9b is formed into a concave lens. Both the lenses 9a and 9b compose the collimator lens devise 9 which can be handled as a single lens component.

The leaser light source 1 is designed to emit an optical beam B of which wavelength $\lambda$ is 405 nm, for instance. The optical beam B emitted from the laser light source 1 enters the collimator lens device 9 (lenses 9a and 9b) via the polarizing beam splitter 4.

The optical beam B that entered the collimator lens 9 (lenses 9a and 9b) is converted to parallel pencil in cases where the cover layer of the disk DK has a thickness of 0.1 mm. In other words, an arrangement is made such that the optical beam B becomes a parallel pencil when the cover layer of the disk DK has a predetermined rated thickness 0. 1 mm.

Of the collimator lens device 9 consisting of the lenses 9a and 9b, the concave lens 9b is fixed at a predetermined potion, whilst the convex lens 9a is mounted to the actuator 12 so that the lens 9a can be driven to move back and forth along an optical axis of the incident optical beam B. When the cover layer of the disk DK has a thickness other than the predetermined rated value (e. g., 0.1 mm), the lens 9a is driven by the actuator 12 so that the lens is moved to correct a spherical aberration attributable to an error in the thickness of the cover layer. That is, when the cover layer has a thickness shifted from the rated value, the optical beam B is converted to divergent light or convergent light by moving the collimating lens 9a so as to correct the spherical aberration due to the error in the thickness of the cover layer. This aberration correcting technique will be detailed later.

The light beam B emitted from the collimator lens device 9 (lenses 9a and 9b) is converted into circularly polarized light by the quarter wavelength plate 6, and then subjected to an angle change at the rising mirror 7 to enter the objective lens 8.

The objective lens 8 is responsible for focusing the optical beam B (circularly polarized) onto a recording layer of the optical disk DK. That is, the optical beam B, which has been converted to the circularly polarized light by the quarter wavelength plate 6, is subjected to focusing at the objective lens 8, so that the beam B is focused onto the recording layer of the disk DK via the not-shown cover layer of the disk DK.

An optical beam B reflected from the recording layer of the disk DK traces the original path, so that the reflected optical beam B passes through the objective lens 8, and then enters the quarter wavelength plate 6. Hence the plate 6 gives the optical beam B a rotation of 90 degrees, compared to the originally polarized direction given to the beam when the beam is radiated, with the result that the beam is reduced to linearly polarized light. After this, the beam B is converted to convergent light by the collimator lens device 9 (lenses 9a and 9b), and then reflected by the polarizing beam splitter 4 so as to enter the detection lens 10. An image is thus formed on the detector 11.

The detector 11, which detects the optical beam B, has four photo detectors, for example. Thus, the photo detectors generate electrical signals that correspond to the intensities of the incoming optical beam, respectively.

To be specific, for reproducing information from the disk DK, the detector 11 detects the optical beam B that comes into the photo diodes by using the generated electrical signals, thus producing a signal in compliance with the optical intensity.

The signal produced by the detector 11 is sent to the controller 13. The controller 13 receives the signal coming from the detector 11, and uses it to create a signal necessary for controlling the collimating lens 9a. This created signal is sent to the actuator 12. More concretely, the controller 13 uses the signal form the detector 11 to find an amount of an aberration caused in the optical beam B, and decides an amount to drive the collimating lens 9a on the basis of the aberration amount of the optical beam B. The controller 13 also operates to supply the actuator 12 with a control signal in which the drive amount is reflected. Responsively to the reception of the control signal, the actuator 12 produces a drive current to drive the collimating lens 9a.

The actuator 12 can be driven in a controlled manner depending on electrical power to be supplied thereto. The actuator 12 is made up of, for example, a voice coil. Hence, adjusting current supplied to the voice coil allows the position of the collimating lens 9a to be displaced. The actuator 12 is not limited to the voice coil, but may be composed of other elements, such as piezoelectric element controllable by supplied voltage and stepping motor responsive to the number of pulses to be command.

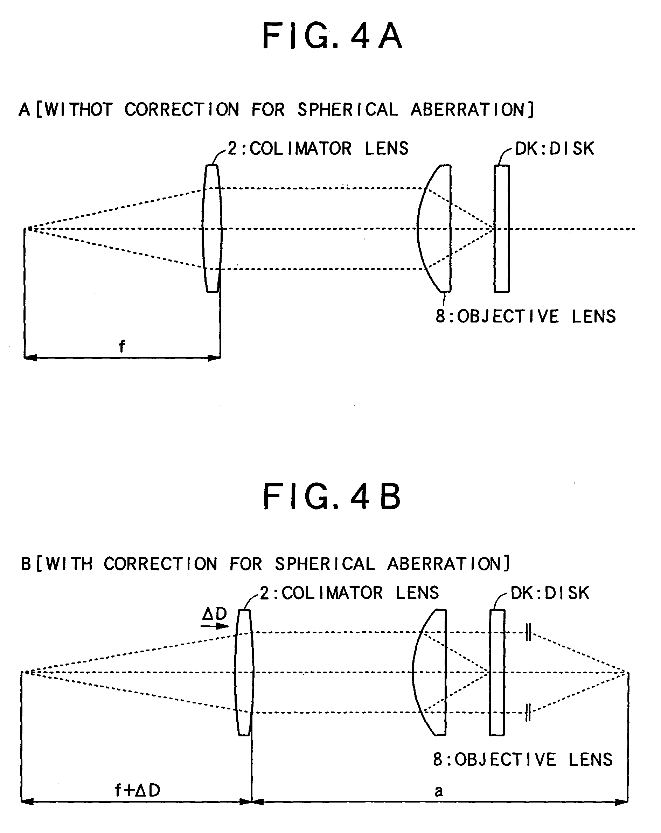

In the next place, a spherical aberration caused on account of error in the cover layer of the disk DK and how to correct the spherical aberration will now be detailed with reference to Figs. 4 to 6.

First, with reference to Fig. 4, the case will now be explained, in which a spherical aberration is corrected by moving the whole collimator lens.

As shown in Fig. 4A, when the thickness of a cover layer of the disk DK is 0.1 mm, an error in the thickness thereof becomes zero. In this case, there is no occurrence of a spherical aberration resulting from the error in the thickness, whereby correcting the aberration is not necessary. Thus, the optical beam is converted to parallel light by the collimator lens 2.

In contrast, the cover layer of the optical disk DK has a thickness of 0.075 mm, a spherical aberration will be caused due to an error in the thickness, as illustrated in Fig. 4B. In this case, the collimator lens 2 should be moved to convert the optical beam B to parallel light such that the spherical aberration is cancelled out.

For instance, the collimator lens 2, whose focal length is 25 mm, is moved toward the disk DK by a distance of $\Delta D$, whereby the optical beam B is focused at a position located a distance a=200 to 250 mm apart.

In this case where the convergent light is made to enter the objective lens 8 to correct the aberration, an amount of movement of the collimator lens 2: $\Delta D$ can be expressed as follows:

$$\Delta D=f^2/(a-f)=f^2/a,$$

on condition that the distance "a" is sufficiently larger than the focal length "f," as can be understood from Fig. 4B.

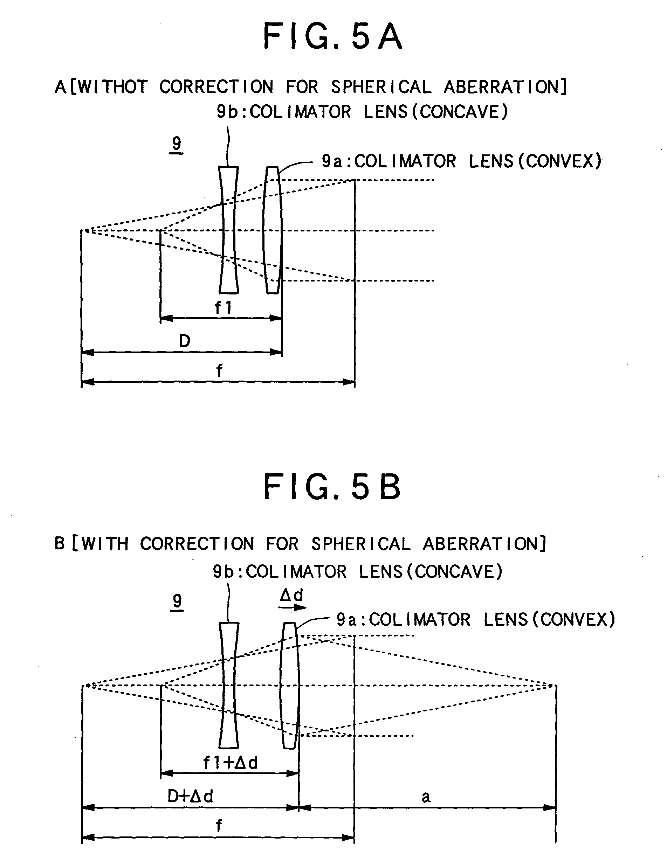

Next, with reference to Figs. 5A and 5B, the case will be explained, in which a spherical aberration is corrected by moving one of the two lenses combined to form the collimator lens device.

As shown in Figs. 5A and 5B, the two lenses 9a and 9b combined to form a collimator lens device 9, in which one lens 9a has a focal length of $f_1$ and the other lens 9b has a focal length of $f_2$. In such condition, a composite focal length "f" of the combined two lenses 9a and 9b becomes:

$$d \leq f_1, f_2$$

$$f=f_1 \cdot f_2/(f_2-f_1).$$

A distance D from the lens 9a to the light source 1 becomes:

$$D= f_1 \cdot f_2/(f_2-f_1)-d\{f_2/(f_2-f_1)-1\}$$

$$D= f-d(f/f_1-1).$$

As shown in Fig. 5B, in the case that only the lens 9a is moved to correct a spherical aberration, an amount of movement required for the lens 9a: $\Delta d$ can be expressed as follows.

$$\Delta d=f_1^2/(a-f_1)=f_1^2/a$$

Calculating a ratio between the moved amount $\Delta D$ required when the whole collimator 2 is moved and the moved amount $\Delta d$ required when only the lens 9a is moved results in:

$$\Delta D/\Delta d = 1/m^2,$$

wherein a ratio m $(=f_2/f_1)$ is a ratio between the focal length $f_1$ of the lens 9a and the composite focal length f.

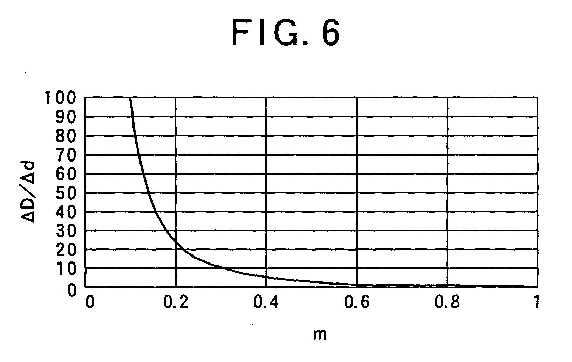

Hence, for instance, if m=0.5, $\Delta D/\Delta d$ =4 is realized. This shows that moving only the lens 9a by "1" is equivalent to moving the whole collimator lens 2 by "4." Fig. 6 is a graph showing this relationship between $\Delta D/\Delta d$ and m.

A high-density optical disk pickup uses a collimator lens of which focal point is about 20 to 25 mm. A double-layer optical disk has a layer-to-layer distance of 25 um. Hence, when such a double-layer disk is adopted, canceling a spherical aberration by moving the whole collimator lens 2 requires that the collimator lens 2 be moved approximately 3 mm. By contrast, when m=5, moving only the lens 9a by 0.75 mm permits the aberration to be canceled out.

When it is assumed that a lens having a focal length of 25 mm undergoes a misalignment of 0.5 mm in adjustment, the spherical aberration increases roughly 12m$\lambda$. The misalignment in lens adjustment should absorb changes in the temperature characteristic of the lens, so that, for open control of the lens, it is necessary to estimate that the misalignment be roughly 0.01 mm. In cases where a deterioration in the spherical aberration, which is due to the adjustment misalignment, a tolerance of 0.25 mm is given to the way of moving the whole collimator lens 2. Since this gives $\Delta D/\Delta d=0.25/0.01=25$, it is preferable that the ratio "m" is larger than 0.2.

Moreover, from the graph shown in Fig. 6, it is understood that when the ratio "m" is less than 0.2, the ratio $\Delta D/\Delta d$ changes sharply. Thus, in this sharply-changing range, fluctuations in the focal length $f_1$ will cause sensitivity in correction of a spherical aberration to change largely as well, this sharply-changing range being an undesirable range. This sharply-changing range also gives strict values to the curvatures of the focal lengths $f_1$ and $f_2$, thus being vulnerable to the aberration and de-centering.

Accordingly, a practical and actually controllable range of the ratio "m" is $0.2 \leq m \leq 0.82$ that fulfills a relationship of $1.5 \leq \Delta D/\Delta d \leq 25$.

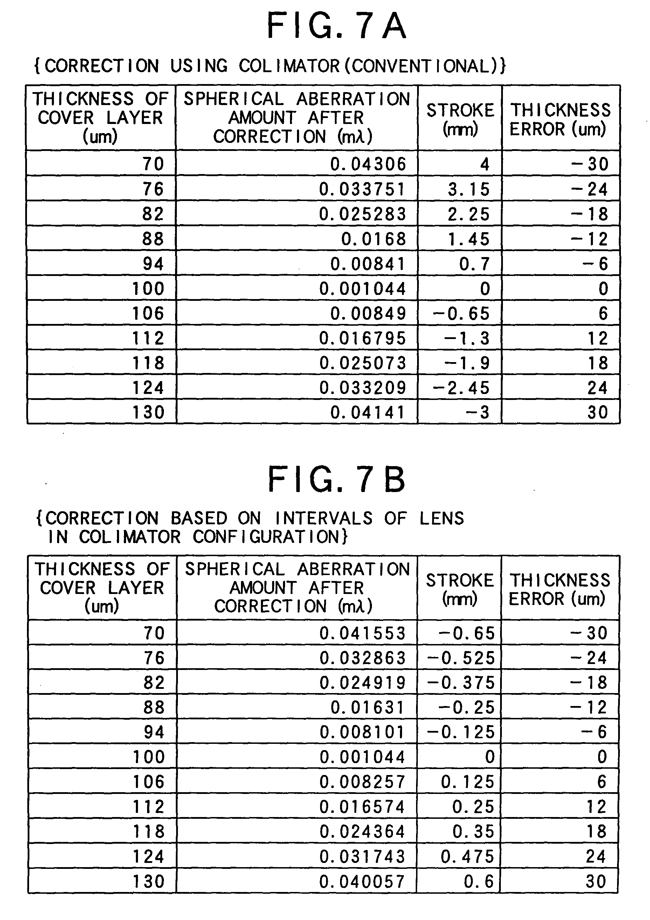

Data indicative of the result of an experiment carried out for correction of a spherical aberration according to the present embodiment will now be described with reference to Figs. 7A and 7B.

Fig. 7A shows data resulted from an experiment in which the conventional collimator lens configured as shown in Fig. 2 was moved as one device. To be specific, in this experiment, a reference thickness of the cover of the disk was 100 um and the whole collimator lens was moved as one device for correction of a spherical aberration. This experimental data show that, for example, when the thickness of the cover layer is changed to 70 um, that is, a thickness error is 30 um, the collimator lens should move by 4 mm for the correction.

In contrast, Fig. 7B shows data resulted from another experiment carried out in the same situation as that for Fig. 7A, except that only one lens included in the collimator lens device was moved. In this case, it is understood that, when the thickness of the cover is changed to 70 um to have a thickness error of 30 um, it is sufficient to move the one lens in the collimator lens device by 0.65 mm in obtaining the same correction effect as the conventional one (refer to Fig. 7A).

Figs. 7A and 7B also reveal that there still remained higher-order spherical aberrations caused due to how design characteristics of an objective lens were, although lower-order spherical aberrations were canceled out by the correction based on the lens movements.

As described so far, the optical pickup according to the present embodiment employs the collimator lens device consisting of plural lenses (for example, two lenses) and moves only one of the plural lens to correct a spherical aberration. Hence, compared to the conventional configuration in which the whole collimator lens is simply moved for the correction, a distance along which a lens is moved for the correction is remarkably shortened.

It is therefore possible to reduce an amount of drive of the lens, which is necessary for the correction of the spherical aberration. A space to allow the lens to be moved therein can be reduced, thus saving the space.

Still, since the lens is unnecessary to move for a long distance, a time required for correcting the spherical aberration can also be lessened, while an amount of energy necessary to drive the lens is saved.

Still further, since the collimator lens device is used, so that it is not necessary that additional parts such as an expander lens directed to the correction of the spherical aberration is installed in the pickup. Thus, the parts cost can be reduced, an additional installation space for such additional parts is not required, and the whole pickup can be made more compact.

Some other modifications will now be described.

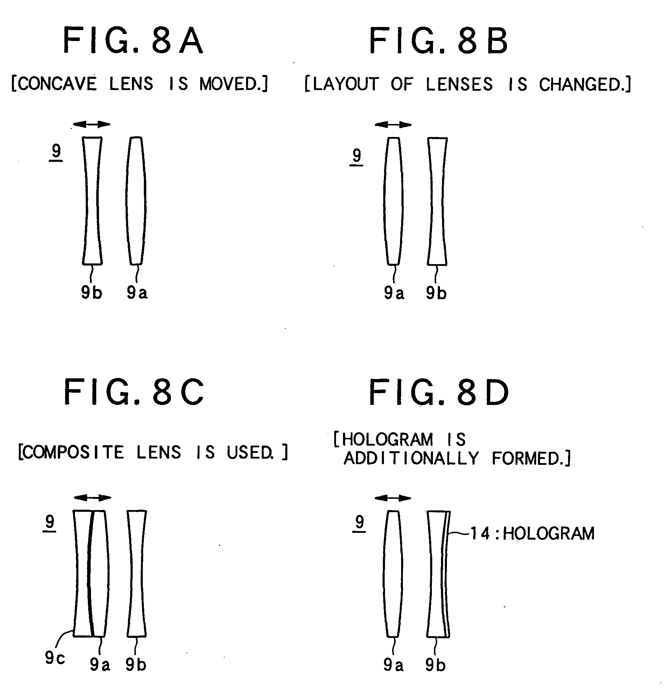

In the foregoing embodiment, of the collimator lens consisting the two lens 9a and 9b, only the other lens 9b may be changed, to which the present invention can be applied as well. As long as the condition of the ratio "m" is met, only the lens 9b can be moved, as pictorially shown in Fig.8A. Even in this modification, smaller fluctuations such as irregularities in sensitivity of aberration correction can be corrected with lens movement strokes kept smaller.

A modification in Fig. 8B shows that the positional relationship between the lens 9a and 9b both composing the collimator lens device 9 is changeable, so that the positions of both lenses 9a and 9b are exchanged to each other.

Further, it is not always necessary that each lens 9a (9B) combined into the collimator lens device 9 consists of a single lens, but as shown by a modification in Fig. 8C, a plurality of lens members may form each lens 9a (9B) combined into the collimator lens device 9. Increasing the number of lenses makes it possible that a chromatic aberration attributable to the objective lens is corrected, in addition to the correction of the foregoing spherical aberration.

As shown by a modification in Fig. 8D, each lens 9a (9B) combined into the collimator lens device 9 may be a lens on which a hologram 14 is formed (i.e., a hologram lens). If the hologram lens is used, a chromatic aberration can be corrected with precision, in addition to the correction of the foregoing spherical aberration.

In addition, the surface of each lens 9a (9B), which is combined into the collimator lens device 9, is not limited to a spherical shape, but to a non-spherical shape. By employing the non-spherical shape, the foregoing high-order spherical aberration, which is caused by the objective lens, can be corrected as well.

The optical pickup according to the present embodiment is also applicable to an information recording medium in which light emitted by the optical pickup enters the substrate side of an optical disk.

The wavelength $\lambda$ of the optical beam B emitted by the laser light source 1 is of course not limited to 405 nm, but may be set to another wavelength.

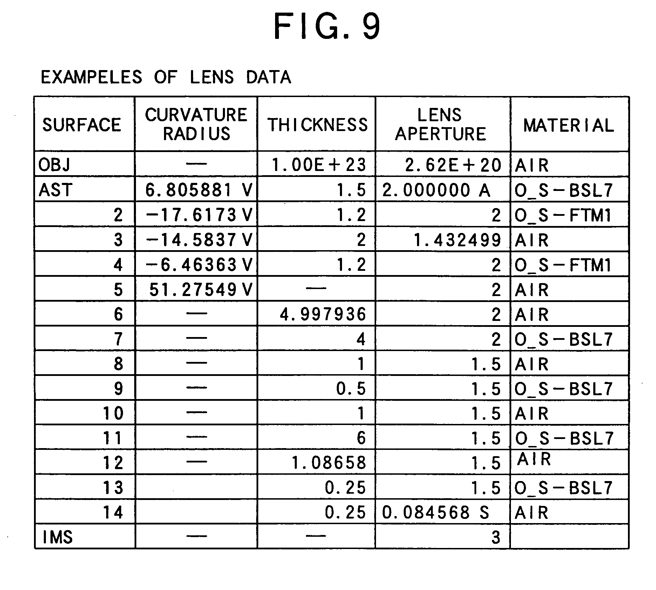

Fig. 9 shows a design example of the collimator lens according to the present embodiment. The listed numeric values in Fig. 9 are just exemplified design values, and it is not meant that the design is limited to such values. Materials usable as the lenses are also not limited to a particular material, and various materials, such as glass and plastic, may be used. Even a combined material of, for example, glass and plastic may be adopted.

Through the foregoing various types of embodiments, the present invention can therefore be summarized such that a hollow-shaped support member is additionally in charge of a pipe resonance, both an acoustic mass inside a hollow-shaped support member and an acoustic capacity cavity of a member other than such support member are responsible for generation of a Helmholtz resonance, and the inner capacity of a hollow-shaped support member is used as a back chamber (cabinet) for the speaker.

## Claims

1. A spherical aberration correcting unit for correcting an aberration caused in an optical beam (B) radiated toward an object (DK) to be detected and focused on the object, **characterized in that** the unit comprises:

   an aberration corrector (9)composed of a plurality of optical members (9a, 9b) and configured to form the optical beam into a parallel pencil and to correct the aberration caused in the optical beam;
   a driver (12) configured to drive any one of the optical members in an optical axis direction of the optical beam;
   a light receiver (11) configured to receive light reflected from the object to produce a light-reception signal from the received light; and
   a controller (13) configured to control the driver based on the produced light-reception signal.

2. The spherical aberration correcting unit according to claim 1, **characterized in that** the object is an optical information recording medium.

3. The spherical aberration correcting unit according to either claim 1 or 2, **characterized in that** a relationship of 0.2<|f1/f|<0.82 is fulfilled, wherein a composite focal length of the aberration corrector is f and a focal length of the driven optical member is fl.

4. The spherical aberration correcting unit according to any one of claims 1 to 3, **characterized in that** the aberration corrector is a collimator lens.

5. The spherical aberration correcting unit according to any one of claims 2 to 4, **characterized in that** the any one of the optical members is composed of a plurality of lenses.

6. The spherical aberration correcting unit according to any one of claims 2 to 5, **characterized in that** the collimator lens has an aspheric surface.

7. The spherical aberration correcting unit according to any one of claims 2 to 6, **characterized in that** a hologram is attached to the collimator lens.

8. An optical pickup for reading and writing information from and to an optical information medium by radiating an optical beam (B) toward the optical information medium (DK), the optical beam being focused on the optical information medium, **charac-**terized in that** the optical pickup comprises:

   an spherical aberration correcting unit (9, 11 to 13)for correcting an aberration caused in the optical beam,

   wherein the unit comprises:

   an aberration corrector (9) composed of a plurality of optical members (9a, 9b) and configured to form the optical beam into a parallel pencil and to correct the aberration caused in the optical beam;
   a driver (12) configured to drive any one of the optical members in an optical axis direction of the optical beam;
   a light receiver (11) configured to receive light reflected from the medium to produce a light-reception signal from the received light; and
   a controller (13) configured to control the driver based on the produced light-reception signal.

9. A spherical aberration correcting method for correcting an aberration caused in an optical beam (B) radiated toward an object (DK) to be detected and focused on the object, **characterized in that** the method comprise the steps of:

   forming the optical beam into a parallel pencil using a plurality of optical members (9a,9b), during which time, correcting the aberration caused in the optical beam;
   driving any one of the optical members in an optical axis direction of the optical beam;
   receiving light reflected from the object to produce a light-reception signal from the received light; and
   controlling the driver based on the produced light-reception signal.

# FIG. 1

## PRIOR ART

DK: DISK
8
5a
5b
4
3
7
6
B: OPTICAL BEAM
2
10
11
1: LASER LIGHT SOURSE

# FIG. 2

## PRIOR ART

DK : DISK

8

1 : LASER LIGHT
SOURSE

4

2

B : OPTICAL
BEAM

7

6

10

11

# FIG. 3

DK:DISK

8

12

9a

9b

4

1:LASER LIGHT
SOURSE

7

6

9

B:OPTICAL
BEAM

10

11

13

# FIG. 4 A

A [WITHOT CORRECTION FOR SPHERICAL ABERRATION]

2:COLIMATOR LENS    DK:DISK

8:OBJECTIVE LENS

$f$

# FIG. 4 B

B [WITH CORRECTION FOR SPHERICAL ABERRATION]

2:COLIMATOR LENS    DK:DISK

$\Delta D$

8:OBJECTIVE LENS

$f+\Delta D$    $a$

# FIG. 5A

A[WITHOT CORRECTION FOR SPHERICAL ABERRATION]

9b:COLIMATOR LENS(CONCAVE)

9a:COLIMATOR LENS(CONVEX)

# FIG. 5B

B[WITH CORRECTION FOR SPHERICAL ABERRATION]

9b:COLIMATOR LENS(CONCAVE)

$\Delta d$

9a:COLIMATOR LENS(CONVEX)

# FIG. 6

EP 1 420 398 A2

# FIG. 7A

{CORRECTION USING COLIMATOR(CONVENTIONAL)}

| THICKNESS OF COVER LAYER (um) | SPHERICAL ABERRATION AMOUNT AFTER CORRECTION (mλ) | STROKE (mm) | THICKNESS ERROR (um) |
|---|---|---|---|
| 70 | 0.04306 | 4 | −30 |
| 76 | 0.033751 | 3.15 | −24 |
| 82 | 0.025283 | 2.25 | −18 |
| 88 | 0.0168 | 1.45 | −12 |
| 94 | 0.00841 | 0.7 | −6 |
| 100 | 0.001044 | 0 | 0 |
| 106 | 0.00849 | −0.65 | 6 |
| 112 | 0.016795 | −1.3 | 12 |
| 118 | 0.025073 | −1.9 | 18 |
| 124 | 0.033209 | −2.45 | 24 |
| 130 | 0.04141 | −3 | 30 |

# FIG. 7B

{CORRECTION BASED ON INTERVALS OF LENS IN COLIMATOR CONFIGURATION}

| THICKNESS OF COVER LAYER (um) | SPHERICAL ABERRATION AMOUNT AFTER CORRECTION (mλ) | STROKE (mm) | THICKNESS ERROR (um) |
|---|---|---|---|
| 70 | 0.041553 | −0.65 | −30 |
| 76 | 0.032863 | −0.525 | −24 |
| 82 | 0.024919 | −0.375 | −18 |
| 88 | 0.01631 | −0.25 | −12 |
| 94 | 0.008101 | −0.125 | −6 |
| 100 | 0.001044 | 0 | 0 |
| 106 | 0.008257 | 0.125 | 6 |
| 112 | 0.016574 | 0.25 | 12 |
| 118 | 0.024364 | 0.35 | 18 |
| 124 | 0.031743 | 0.475 | 24 |
| 130 | 0.040057 | 0.6 | 30 |

14

# FIG. 8A

[CONCAVE LENS IS MOVED.]

9

9b    9a

# FIG. 8B

[LAYOUT OF LENSES IS CHANGED.]

9

9a    9b

# FIG. 8C

[COMPOSITE LENS IS USED.]

9

9c   9a  9b

# FIG. 8D

[HOLOGRAM IS
ADDITIONALLY FORMED.]

9

14 : HOLOGRAM

9a   9b

# FIG. 9

EXAMPELES OF LENS DATA

| SURFACE | CURVATURE RADIUS | THICKNESS | LENS APERTURE | MATERIAL |
|---|---|---|---|---|
| OBJ | — | 1.00E+23 | 2.62E+20 | AIR |
| AST | 6.805881 V | 1.5 | 2.000000 A | O_S−BSL7 |
| 2 | −17.6173 V | 1.2 | 2 | O_S−FTM1 |
| 3 | −14.5837 V | 2 | 1.432499 | AIR |
| 4 | −6.46363 V | 1.2 | 2 | O_S−FTM1 |
| 5 | 51.27549 V | — | 2 | AIR |
| 6 | — | 4.997936 | 2 | AIR |
| 7 | — | 4 | 2 | O_S−BSL7 |
| 8 | — | 1 | 1.5 | AIR |
| 9 | — | 0.5 | 1.5 | O_S−BSL7 |
| 10 | — | 1 | 1.5 | AIR |
| 11 | — | 6 | 1.5 | O_S−BSL7 |
| 12 | — | 1.08658 | 1.5 | AIR |
| 13 | | 0.25 | 1.5 | O_S−BSL7 |
| 14 | | 0.25 | 0.084568 S | AIR |
| IMS | — | — | 3 | |